# EUROPEAN PATENT APPLICATION

(11) **EP 2 882 079 A2**
(43) Date of publication of application: **10.06.2015**
(21) Application number: 14192803.6
(22) Date of filing: 12.11.2014
(51) Int. Cl.: H02K 1/27, H02K 1/32, H02K 9/10

(54) **Permanent magnet rotor in a rotating electrical machine**

(30) Priority: 09.12.2013 JP 2013253880
(71) Applicant: Kabushiki Kaisha Yaskawa Denki, Kitakyushu-shi, Fukuoka 806-0004 (JP)
(72) Inventor: Tsumagari, Hiroshi, Kitakyushu-shi, Fukuoka 806-0004 (JP); Morishita, Daisuke, Kitakyushu-shi, Fukuoka 806-0004 (JP)
(74) Representative: Viering, Jentschura & Partner Patent- und Rechtsanwälte

(57) **Abstract**

A rotor (2) of a rotating electrical machine includes a rotor iron core (20), a plurality of duct members (22), a plurality of permanent magnets (23), and a plurality of through holes. The rotor iron core (20) comprises a plurality of iron core blocks (21) and a plurality of duct members (22). Each of the duct members (22) is disposed between two adjacent iron core blocks (21). Each iron core block (21) includes a circular duct plate comprising a plurality of radial duct pieces disposed in said circular duct plate. The plurality of permanent magnets (23) are disposed in each of the plurality of iron core blocks (21). The plurality of through holes are disposed in duct plates and iron core blocks (21) to hold the plurality of permanent magnets (23).

## Description

### BACKGROUND

### FIELD OF THE INVENTION

The present invention relates to a rotor of a rotating electrical machine and a rotating electrical machine.

### DISCUSSION OF THE BACKGROUND

Japanese Examined Utility Model (Registration) Application Publication No. 63-21177 discloses a rotating electrical machine including a rotor iron core. The rotor iron core includes a plurality of axial ventilation paths and a plurality of radial ventilation ducts. The plurality of axial ventilation paths are disposed in the rotor iron core and extend in an axial direction. The plurality of radial ventilation ducts communicate with the plurality of axial ventilation paths and extend radially outward from the plurality of axial ventilation paths.

The contents of Japanese Examined Utility Model (Registration) Application Publication No. 63-21177 are incorporated herein by reference in their entirety.

In recent years, permanent magnets have improved in performance and reduced in price, and thus found applications in motors for electric vehicles and trains. Permanent magnets have also been applied to large-sized rotating electrical machines such as in wind power generators. In particular, permanent magnets used in IPM (Interior Permanent Magnet) rotating electrical machines excel in mechanical strength. However, since permanent magnets contain rare earth metals, which are expensive, larger permanent magnets involve higher costs. Additionally, permanent magnets may be demagnetized in high-temperature environments, which necessitate more expensive rare earth metals. Thus, there is a need for an IPM rotating electrical machine with superior coolability.

The present disclosure has been made in view of the above-described circumstances, and it is an object of the present disclosure to provide a rotor of an IPM rotating electrical machine having superior coolability, and to provide a rotating electrical machine having superior coolability.

### SUMMARY

According to one aspect of the present disclosure, a rotor of a rotating electrical machine includes a rotor iron core, a plurality of duct members, a plurality of permanent magnets, and a plurality of through holes. The rotor iron core includes a plurality of iron core blocks. The plurality of duct members are each disposed between two adjacent iron core blocks among the plurality of iron core blocks and each include a circular duct plate including a plurality of radial duct pieces disposed in the circular duct plate. The plurality of permanent magnets are disposed in each of the plurality of iron core blocks. The plurality of through holes are disposed in the duct plate for the plurality of permanent magnets to be disposed in the plurality of through holes.

According to another aspect of the present disclosure, a rotating electrical machine includes a stator, the above-described rotor, and a shaft. The rotor is secured to the shaft.

According to the other aspect of the present disclosure, a rotating electrical machine includes a stator, a rotor, a rotor iron core, a plurality of duct members, a plurality of permanent magnets, a plurality of through holes, and bracing means. The rotor iron core includes a plurality of iron core blocks. The plurality of duct members are each disposed between two adjacent iron core blocks among the plurality of iron core blocks and each include a circular duct plate including a plurality of radial duct pieces disposed in the circular duct plate. The plurality of duct members defining ventilation ducts. The plurality of permanent magnets are disposed in each of the plurality of iron core blocks. The plurality of through holes are disposed in the duct plate for the plurality of permanent magnets to be disposed in the plurality of through holes. The bracing means is for bracing end surfaces of the plurality of iron core blocks in areas at outer circumference sides of the plurality of through holes in the ventilation ducts.

The present disclosure provides a rotor of an IPM rotating electrical machine having superior coolability, and provides a rotating electrical machine having superior coolability.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is an axial sectional view of a rotating electrical machine and an air cooler according to an embodiment;
FIG. 2 is an axial sectional view of an upper half portion of a rotor of the rotating electrical machine;
FIG. 3 is a cross-sectional view of the rotor taken along the line A-A illustrated in FIG. 2;
FIG. 4 illustrates how end surfaces of iron core blocks are deformed as if to swell into ventilation ducts due to pressing force;
FIGs. 5A and 5B illustrate modifications of an inclined portion of a first duct piece;
FIG. 6 is a cross-sectional view of a modification of the rotor in which conductive bar members penetrate through the rotor at the outer circumference side of permanent magnets;
FIG. 7 is a cross-sectional view of a modification of the rotor in which first duct pieces each include an L-shaped inclined portion, and the conductive bar members are disposed;
FIG. 8 is a cross-sectional view of a modification of the rotor in which the first duct pieces have no inclined portions, and the conductive bar members are disposed;
FIG. 9 is a diagram illustrating a modification of an air cooler intended for indoor installment;
FIG. 10 is an axial sectional view of a modification of the rotating electrical machine and the air cooler in which the positions of the ventilation ducts in the stator and the rotor are shifted from each other; and
FIG. 11 is a cross-sectional view of a modification of the rotor in which notches are disposed at the outer circumference side of the bar members.

### DESCRIPTION OF THE EMBODIMENTS

The embodiments will now be described with reference to the accompanying drawings, wherein like reference numerals designate corresponding or identical elements throughout the various drawings.

### <Configurations of rotating electrical machine and air cooler>

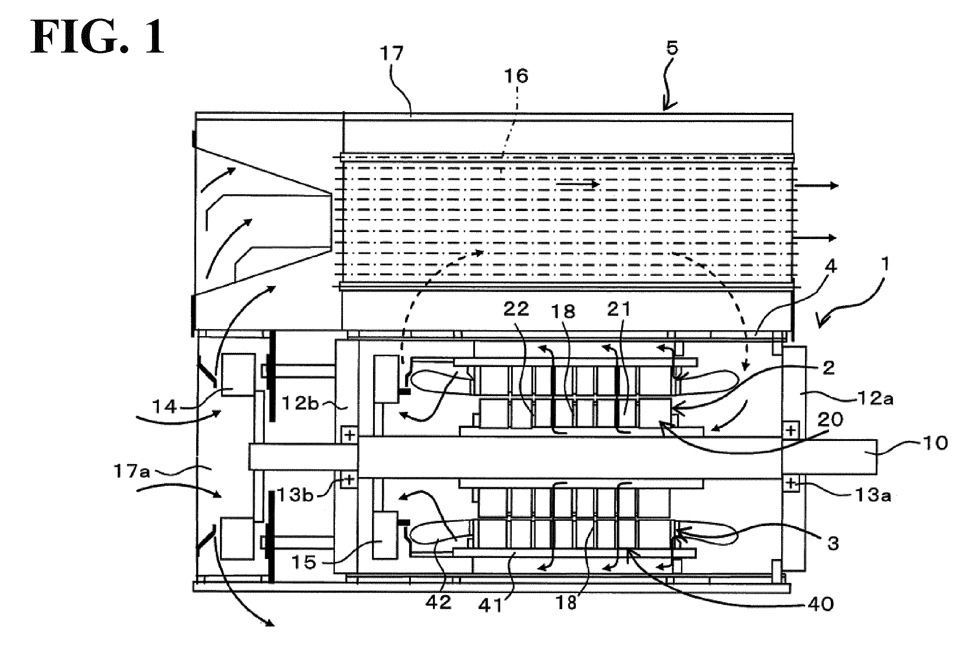

Description will be made below with regard to configurations of a rotating electrical machine 1 and an air cooler 5 according to this embodiment. As illustrated in FIG. 1, the rotating electrical machine 1 is an inner-rotor electric generator, with a rotor 2 disposed inside a stator 3. The rotating electrical machine 1 includes the rotor 2, the stator 3, a main body frame 4, an air cooler 5, and a shaft 10. The main body frame 4 has a cylindrical shape and accommodates the rotor 2 and the stator 3. The air cooler 5 cools the rotor 2 and the stator 3. The rotor 2 is secured to the shaft 10.

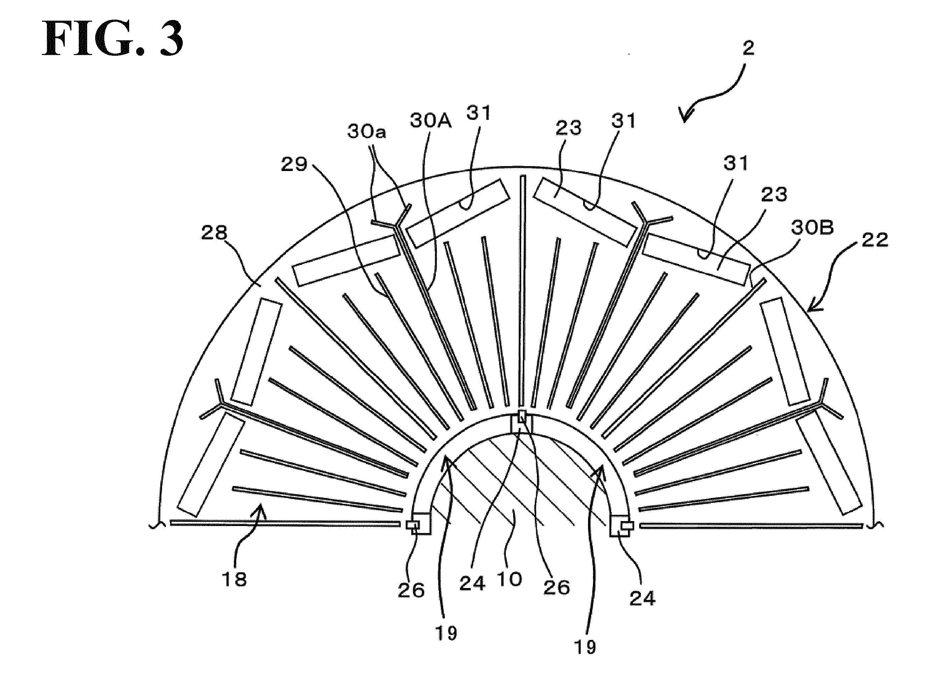

A stator rib 41 is disposed at the inner circumference side of the main body frame 4, and the stator 3 is disposed in the stator rib 41. The stator 3 and the rotor 2 are separated in a radial direction by a predetermined space. The rotor 2 includes a rotor iron core 20, and the stator 3 includes a stator iron core 40. In the rotor 2 and the stator 3, ventilation ducts 18 radially penetrate through the rotor iron core 20 and the stator iron core 40. At the inner circumference surface side of the rotor iron core 20, air conduits 19 extend in the axial direction. As illustrated in FIG. 3, the air conduits 19 are disposed between the rotor iron core 20 and the shaft 10 at a plurality of positions in the circumferential direction. The shaft 10 is rotatably supported on a load side bearing 13a and an anti-load side bearing 13b. The load side bearing 13a has an outer wheel fitted with a load side bracket 12a, which is disposed at the load side (right side in FIG. 1) of the main body frame 4. The anti-load side bearing 13b has an outer wheel fitted with an anti-load side bracket 12b, which is disposed at the anti-load side (left side in FIG. 1) of the main body frame 4.

The air cooler 5 includes an external fan 14, an internal fan 15, a plurality of cooling pipes 16, and a cooler frame 17. The external fan 14 is disposed at the anti-load side end of the shaft 10. The internal fan 15 is disposed between the anti-load side bracket 12b of the shaft 10 and the rotor 2. The plurality of cooling pipes 16 are disposed above the main body frame 4. The cooler frame 17 includes an air inlet window 17a at the anti-load side of the external fan 14, and covers an area ranging from the external fan 14 to the load side end of the cooling pipe 16.

The air cooler 5 rotates the external fan 14 and the internal fan 15 by using the rotation of the shaft 10. The external fan 14 draws in external air through the air inlet window 17a, and supplies the drawn external air to the cooling pipe 16. In order to use the internal air of the main body frame 4 as cooling air, the internal fan 15 draws the internal air of the main body frame 4 into the air conduits 19 (see FIG. 3), and causes the internal air to flow from the load side in the axial direction. Then, the internal fan 15 sends the cooling air from the air conduits 19 to the ventilation ducts 18 by centrifugal force, and causes the cooling air to flow through the ventilation ducts 18 radially outward so as to cool the rotor 2 and the stator 3. After the internal air has cooled the rotor 2 and the stator 3, the internal air flows along the main body frame 4 at the radially outer side of the stator 3 to the anti-load side. Then, the internal fan 15 sends the cooling air to the installment area of the cooling pipe 16. Thus, the internal air is cooled through heat exchange with the external air flowing inside the cooling pipe 16, and circulates in the main body frame 4 again.

Thus, the air cooler 5 according to this embodiment has one separate system for external air to be drawn from the outside and another separate system for internal air for cooling the rotating electrical machine 1. A possible application of the air cooler 5 is an outdoor application; however, this should not be construed as limiting the air cooler of the rotating electrical machine 1.

### <Configuration of rotor>

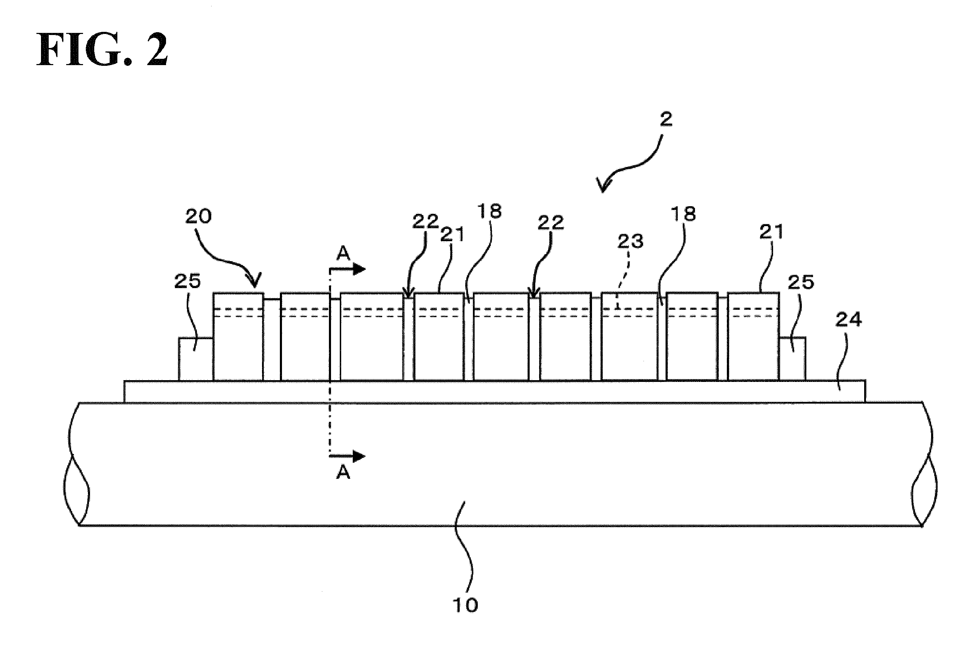

As illustrated in FIGs. 2 and 3, the rotor 2 includes the rotor iron core 20, a plurality of duct members 22, and a plurality of permanent magnets 23. The rotor iron core 20 includes a plurality of iron core blocks 21. The plurality of iron core blocks 21 are arranged in the axial direction of the shaft 10. The plurality of duct members 22 are each disposed between two adjacent iron core blocks 21 among the plurality of iron core blocks 21. The plurality of permanent magnets 23 are embedded in each of the plurality of iron core blocks 21. The permanent magnets 23 penetrate through the duct members 22 in the axial direction into the plurality of iron core blocks 21.

The plurality of iron core blocks 21 and the plurality of duct members 22 form a ring shape surrounding the shaft 10. As illustrated in FIG. 3, shaft ribs 24 are disposed upright on the shaft 10. The shaft ribs 24 extend in the axial direction at a plurality of positions in the circumferential direction (in the example illustrated in FIG. 3, the shaft ribs 24 are disposed at four positions at 90° intervals). The shaft ribs 24 define the axially extending air conduits 19 between the shaft 10 and the iron core blocks 21 and between the shaft 10 and the duct members 22. As illustrated in FIG. 2, two clamps 25 are disposed on the outer circumference of each shaft rib 24. The plurality of iron core blocks 21 and the plurality of duct members are secured to the shaft 10 through the shaft ribs 24 while being pressed inward in the axial direction by the two clamps 25. Between the shaft ribs 24 and the duct members 22, keys 26 are disposed to fix the duct members 22 to the circumference of the shaft 10.

### <Configuration of duct member>

The duct members 22 are made of a non-magnetic material such as austenitic SUS. As illustrated in FIG. 3, each duct member 22 includes a duct plate 28, a plurality of first duct pieces 30A and 30B, and a plurality of second duct pieces 29. The duct plate 28 has a circular plate shape. The first duct pieces 30A and 30B and the second duct pieces 29 are radially disposed on one side (load side or anti-load side) surface of the duct plate 28. Each duct member 22 is disposed between two adjacent iron core blocks 21 among the plurality of iron core blocks 21 to form the ventilation duct 18 between the two adjacent iron core blocks 21 among the plurality of iron core blocks 21.

Over an outer circumference portion of the duct plate 28, a plurality of through holes 31 are disposed. The through holes 31 are for the permanent magnets 23 to be inserted into the through holes 31. Specifically, the plurality of through holes 31 are disposed over the outer circumference portion of the duct plate 28 to ensure that a plurality of pairs of permanent magnets 23 each form an approximately V shape in a view from the axial direction, and the plurality of approximately V-shaped pairs of permanent magnets 23 are disposed along the circumferential direction.

The first duct pieces 30A and 30B are each disposed between two adjacent through holes 31 among the plurality of through holes 31 in the circumferential direction. The first duct pieces 30A and 30B radially extend from a vicinity of the inner circumference side edge of the duct plate 28 to a vicinity of the outer circumference side edge of the duct plate 28. The second duct pieces 29 are disposed in an area in the circumferential direction in which the through holes 31 are disposed. Each of the second duct pieces 29 radially extends from a vicinity of the inner circumference side edge of the duct plate 28 to the inner circumference side of one through hole 31 among the two adjacent through holes 31. That is, the second duct pieces 29 are shorter than the first duct pieces 30A and 30B. Among the plurality of first duct pieces 30A and 30B, the first duct pieces 30A are each disposed between one approximately V-shaped pair of through holes 31. Each first duct piece 30A has two inclined portions 30a at the outer circumference side of the one approximately V-shaped pair of through holes 31. Relative to a radial direction, one inclined portion 30a among the two inclined portions 30a is inclined toward one side of the circumferential direction, and the other inclined portion 30a is inclined toward the other side of the circumferential direction (in this embodiment, both inclined portions 30a are inclined at an angle equal to or less than the right angle). Thus, each first duct piece 30A has a Y shape, with its radially outer side end forked.

Each first duct piece 30A has two plate members superposed on each other so as to form the forked portion of the Y shape. This, however, should not be construed in a limiting sense. Similarly to the other duct pieces, each first duct piece 30A may have a single plate member. In this case, it is possible to use another plate member to form the forked portion at the distal end.

Among the plurality of first duct pieces 30A and 30B, the plurality of second first duct pieces 30B are each disposed between one approximately V-shaped pair of through holes 31 and another approximately V-shaped pair of through holes 31. No inclined portion is provided on each second first duct piece 30B. Each second first duct piece 30B linearly radially extends from a vicinity of the inner circumference side edge of the duct plate 28 to a vicinity of the outer circumference side edge of the duct plate 28. This eliminates or minimizes an increase in resistance against ventilation, and ensures a smooth radially outward flow of the cooling air through the ventilation ducts 18. When it is not necessary to discriminate between the first duct pieces 30A and the second first duct pieces 30B, the first duct pieces 30A and 30B will be hereinafter referred to as "first duct piece 30" or "duct piece 30" for simplicity.

The stator 3 has a configuration similar to the configuration of the rotor iron core 20. A difference is that a stator coil 42 of the stator 3 is wound around a plurality of iron core blocks disposed at the stator iron core 40 without permanent magnets, which will not be elaborated here. Specifically, the stator iron core 40 is disposed at the stator rib 41 to define air conduits in the axial direction. Between every two adjacent iron core blocks among the plurality of iron core blocks of the stator iron core 40, a duct member is disposed. Thus, the ventilation ducts 18 are formed to radially penetrate through the stator iron core 40.

### <Advantageous effects of the embodiment>

As has been described hereinbefore, the rotating electrical machine 1 in the embodiment is what is called an IPM rotating electrical machine, in which the plurality of permanent magnets 23 penetrate through the duct members 22 in the axial direction and are embedded in the iron core blocks 21.

The rotor 2 of the rotating electrical machine 1 includes the duct members 22. Each of the duct members 22 is disposed between two adjacent iron core blocks among the plurality of iron core blocks 21. Each duct member 22 includes the circular duct plate 28 and the plurality of duct pieces 29 and 30. The plurality of duct pieces 29 and 30 are radially disposed on the duct plate 28. The ventilation ducts 18 are each formed between two adjacent iron core blocks among the plurality of iron core blocks 21. This ensures that the cooling air flowing in the axial direction through the air conduits 19 is circulated radially outward through the ventilation ducts 18 by centrifugal force. The air conduits 19 are disposed between the outer circumference surface of the shaft 10 and the inner circumference surface of the rotor iron core 20. Here, not only the duct plate 28 and the duct pieces 29 and 30 function as heat radiation surfaces, but also the duct pieces 29 and 30 provide a fanning effect of forcefully circulating the cooling air. Thus, the rotor 2 is effectively cooled. As a result, the IPM rotating electrical machine 1 has superior coolability.

A conventional configuration of an IPM rotating electrical machine with ventilation ducts may be that the duct members 22 have no through holes for a plurality of permanent magnets; instead, the magnets are separated from each other at the positions where the duct members 22 are disposed, and the magnets are embedded in the iron core blocks 21. This configuration necessitates work of inserting the permanent magnets 23 at every iron core block 21. In contrast, the through holes 31 in the rotating electrical machine 1 according to this embodiment penetrate through the duct members 22, and the permanent magnets 23 are inserted in the through holes 31. This ensures that the work of inserting the permanent magnets 23 may be after assembly of the entire rotor iron core 20 incorporating the plurality of iron core blocks 21. This, in turn, simplifies the production process of the rotor 2.

In particular, in this embodiment, the plurality of through holes 31 are formed in the duct plate 28 of each duct member 22, and the permanent magnets 23 penetrate through the through holes 31 and are inserted in the through holes 31. This requires the duct members 22 to prevent interference between the permanent magnets 23 to be inserted and the duct pieces 29 and 30.

In this embodiment, each of the first duct pieces 30 is disposed between two adjacent through holes 31 among the plurality of through holes 31 in the circumferential direction. Each first duct piece 30 radially extends from a vicinity of the inner circumference side edge of the duct plate 28 to a vicinity of the outer circumference side edge of the duct plate 28. Each of the second duct pieces 29 is disposed in the area in the circumferential direction in which a corresponding through hole 31. Each second duct piece 29 radially extends from a vicinity of the inner circumference side edge of the duct plate 28 to the inner circumference side of the corresponding through hole 31. This ensures a minimum number of duct pieces necessary for implementing the ventilation ducts 18 while preventing interference between the permanent magnets 23 to be inserted and the duct pieces 29 and 30.

In particular, in this embodiment, each of the first duct pieces 30A includes the inclined portion 30a. The inclined portion 30a is inclined relative to a radial direction in an area at the outer circumference side of corresponding through holes 31. This provides the following advantageous effects. As described above, the rotor iron core 20 with the duct members 22 disposed between the plurality of iron core blocks 21 is secured while being pressed at both ends of the rotor iron core 20 by pressing members such as the clamps 25. Thus, two iron core blocks 21 holding the duct member 22 are pressed in directions toward each other. However, the duct pieces 29 and 30 of the duct members 22 function as bracing members to maintain the gaps between stacked magnetic steel plates of each iron core block 21.

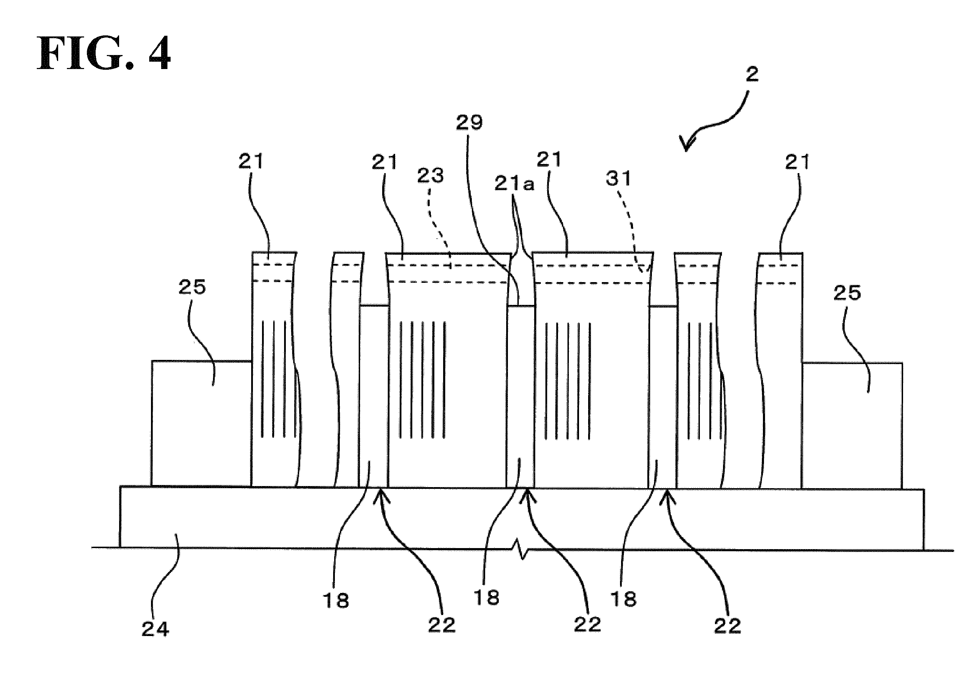

In the area in the circumferential direction of the duct member 22 where the through holes 31 are disposed, the second duct pieces 29 can not be extended beyond the inner circumference side of the through holes 31. Thus, no duct pieces can be disposed at the outer circumference side of the through holes 31. Because of the lack of bracing members at the outer circumference side of the through holes 31, the end surfaces 21a of the iron core blocks 21 may be deformed by pressing force as if to swell into the ventilation ducts 18, as illustrated in FIG. 4. This may increase the gaps between the stacked magnetic steel plates, creating a possibility of damage to the magnetic steel plates through rotational vibration.

In this embodiment, each first duct piece 30A includes the inclined portion 30a. The inclined portion 30a is inclined relative to a radial direction at the outer circumference side of the through holes 31. It is possible to extend the inclined portion 30a of the first duct piece 30A to an area in which the above-described deformation may occur. This, as a result, diminishes the area without bracing members, and thus eliminates or minimizes deformation of the end surfaces of the iron core blocks 21. That is, the first duct piece 30A is an example of the bracing means for bracing the end surfaces of the iron core blocks at both sides of the first duct piece 30A in the outer circumference side area of the through holes 31 of the ventilation ducts defined by the duct members.

In particular, in this embodiment, each first duct piece 30A includes two inclined portions 30a. One of the inclined portions 30a is inclined relative to a radial direction toward one side of the circumferential direction, and the other one of the inclined portions 30a is inclined relative to the radial direction toward the other side of the circumferential direction. This ensures that the two inclined portions 30a extend toward the areas that are located at both sides of the first duct piece 30A in the circumferential direction and at the outer circumference side of the through holes 31. This, as a result, further diminishes the area without bracing members, and thus further enhances the effect of eliminating or minimizing deformation of the end surfaces of the iron core blocks 21. As in this embodiment, providing each first duct piece 30A with two inclined portions 30a to form the Y shape at the outer circumference side end of the first duct piece 30A realizes an additional effect of reducing resistance against ventilation (compared with the case of a T shape, for example).

In particular, in this embodiment, the duct members 22 are made of a non-magnetic material. This eliminates or minimizes a leakage of magnetic flux of the permanent magnets 23.

In particular, in this embodiment, a plurality of pairs of permanent magnets 23 each form an approximately V shape in a view from the axial direction, and the plurality of approximately V-shaped pairs of permanent magnets 23 are disposed along the circumferential direction of the rotor iron core 20. Arranging each pair of the plurality of permanent magnets 23 in the V shape focuses the magnetic forces of the adjacent permanent magnets 23 on the outer circumference portion of the rotor 2. This increases the interlinked flux density at the stator 3.

### <Modifications>

It is noted that the disclosed embodiments should not be construed in a limiting sense, and various modifications are possible without departing from the technical scope of the present disclosure. Modifications will be described below.

### (1) Forming the inclined portions of the first duct piece in other shapes such as T shape

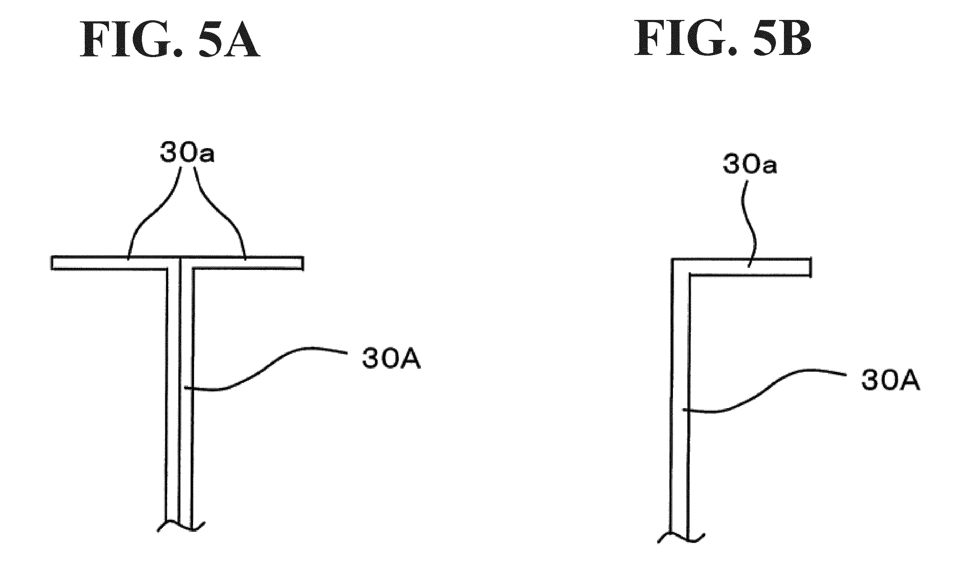

In the above-described embodiment, each first duct piece 30A includes two inclined portions 30a. In the outer circumference side area of the through holes 31, one inclined portion 30a among the two inclined portions 30a is inclined relative to a radial direction toward one side of the circumferential direction at an angle equal to or less than the right angle, and the other inclined portion 30a is inclined relative to the radial direction toward the other side of the circumferential direction at an angle equal to or less than the right angle. Thus, the first duct piece 30A has a Y shape. This, however, should not be construed in a limiting sense. FIGs. 5A and 5B illustrate exemplary modifications of the inclined portion 30a of each first duct piece 30A.

As illustrated in FIG. 5A, at the outer circumference side area of the through holes 31, the inclined portions 30a are respectively inclined at the right angle relative to a radial direction toward one side and the other side of the circumferential direction. Thus, the outer circumference side end of the first duct piece 30A is approximately T shaped. As illustrated in FIG. 5B, at the outer circumference side area of the through holes 31, the inclined portion 30a is inclined at the right angle relative to the radial direction toward one side or the other side of the circumferential direction. Thus, the outer circumference side end of the first duct piece 30A is approximately L shaped.

When the outer circumference side end of the first duct piece 30A is shaped as illustrated in any of FIGs. 5A and 5B, each inclined portion 30a extends to the outer circumference side area of the corresponding through hole 31. This, as a result, diminishes the area without bracing members, and thus eliminates or minimizes deformation of the end surfaces of the iron core blocks 21, similarly to the above-described embodiment.

### (2) Providing conductive bar members through permanent magnets at outer circumference side

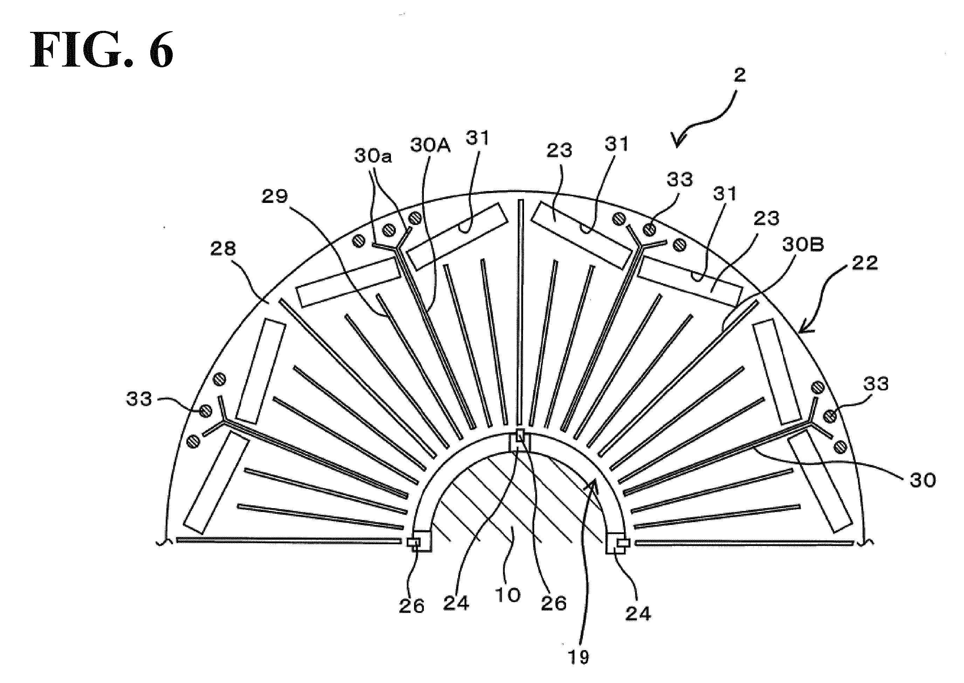

FIG. 6 illustrates an exemplary modification. This modification is as illustrated in FIG. 6. A plurality of (a non-limiting example is three) bar members 33 are disposed in the outer circumference side area of each pair of permanent magnets 23 in the rotor iron core 20. Each bar member 33 is made of a conductor penetrating through the plurality of iron core blocks 21 and the plurality of duct members 22 in the axial direction. Two bar members 33 among the bar members 33 are disposed at both sides of the two inclined portions 30a of the first duct piece 30A in the circumferential direction, and the remaining one bar member 33 is disposed in a vicinity of an intermediate portion between the two bar members 33. The bar members 33 are electrically coupled to each other at their axial ends through a short bar, not illustrated. When, during operation of the rotating electrical machine 1, its rotational speed becomes unstable for some reason, then the bar members 33 function as a damper winding to generate damping torque so as to stabilize the rotational speed.

Each bar member 33 penetrates through the plurality of iron core blocks 21 and the plurality of duct members 22, and in this state, each bar member 33 is fixed with an adhesive, for example. That is, in this modification, not only the duct pieces 29 and 30 but also the plurality of bar members 33 function as bracing members. This further enhances the effect of eliminating or minimizing deformation of the end surfaces of the iron core blocks 21. Thus, the bar member 33 is an example of the bracing means for bracing the end surfaces of the iron core blocks at both sides of the first duct piece 30A in the outer circumference side area of the through holes 31 of the ventilation ducts defined by the duct members.

When harmonic components are contained in the flux density in the gap between the stator 3 and the rotor 2, eddy current may be induced on the surface of the rotor 2 and heat may be generated. Although the heat may cause an eddy current loss, this modification ensures a reduction in the eddy current loss in that current flows through the bar members 33.

When a sudden three-phase short-circuit occurs in the rotating electrical machine 1 for some reason, an amount of current that is a few or several times larger than a rated current may flow. Although the large current may demagnetize the permanent magnets 23, this modification ensures a reduction in the demagnetization of the permanent magnets 23 in that current flows through the bar members 33.

### (3) Combination of L-shaped inclined portion and conductive bar member

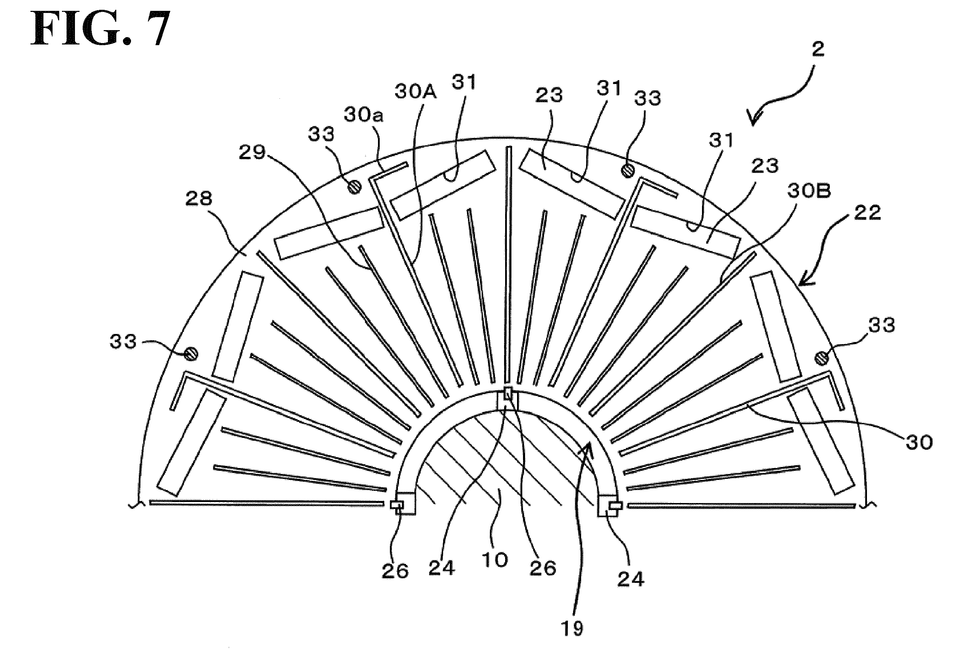

FIG. 7 illustrates an exemplary modification. This modification is as illustrated in FIG. 7. Each first duct piece 30A of the duct member 22 includes the inclined portion 30a. The inclined portion 30a is inclined at the right angle relative to a radial direction in the outer circumference side area of the through holes 31 toward one side of the circumferential direction. Thus, the outer circumference side end of the first duct piece 30A is approximately L shaped. In the outer circumference side area of each pair of permanent magnets 23, a single bar member 33 is disposed (which may alternatively be provided in plural). The bar member 33 is made of a conductor penetrating through the plurality of iron core blocks 21 and the plurality of duct members 22 in the axial direction. The bar member 33 is disposed at a side opposite to the direction in which the L-shaped inclined portion 30a extends in the outer circumference side area of the through holes 31.

Also in this modification, the inclined portions 30a of the first duct pieces 30A and the bar members 33 function as bracing members, and thus eliminate or minimize deformation of the end surfaces of the iron core blocks 21. In addition, this modification provides damper winding functions including stabilizing the rotational speed of the rotating electrical machine 1.

### (4) Combination of conductive bar member and first duct piece without inclined portions

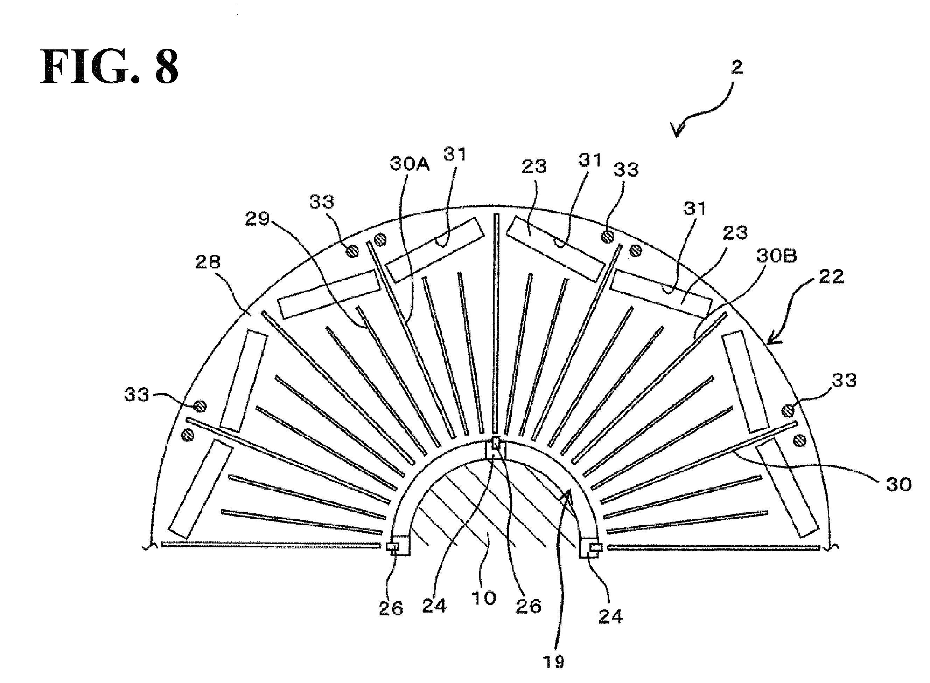

FIG. 8 illustrates an exemplary modification. This modification is as illustrated in FIG. 8. Each first duct piece 30A of the duct member 22 is disposed between one approximately V-shaped pair of permanent magnets (through holes 31). The first duct piece 30A has no inclined portions and linearly radially extends to a vicinity of the outer circumference side edge of the duct plate 28. In the outer circumference side area of each pair of permanent magnets 23, a plurality of (two in this example, possibly three or more in another example) bar members 33 are disposed. Each bar member 33 is made of a conductor penetrating through the plurality of iron core blocks 21 and the plurality of duct members 22 in the axial direction. The two bar members 33 are disposed at both sides of the first duct piece 30A in the circumferential direction.

Also in this modification, the first duct pieces 30A and the bar members 33 function as bracing members, and thus eliminate or minimize deformation of the end surfaces of the iron core blocks 21. In addition, this modification provides damper winding functions.

### (5) Rotating electrical machine intended for indoor installment

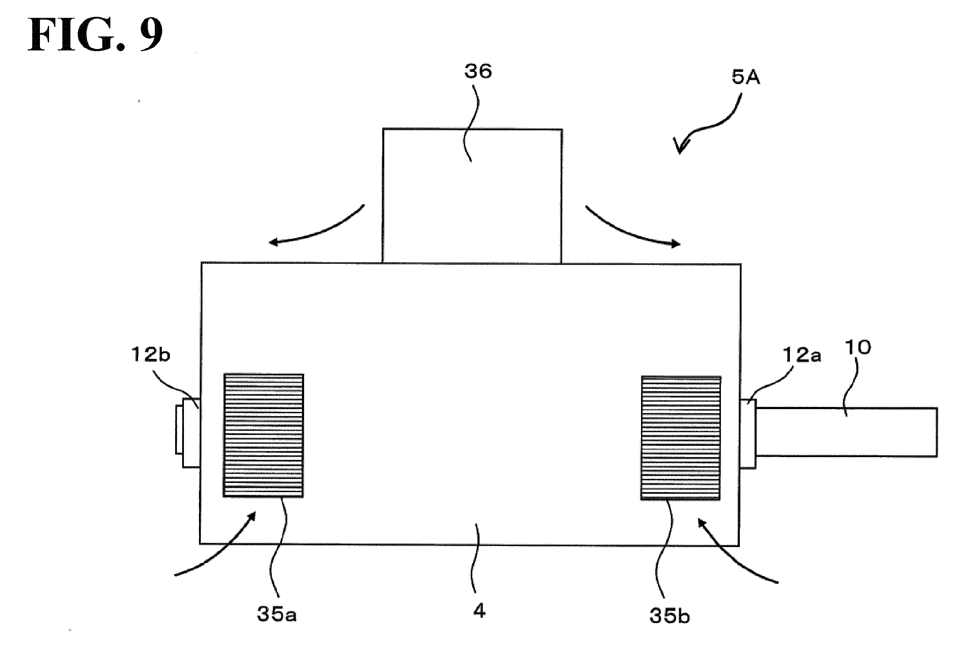

While in the above-described embodiment the rotating electrical machine 1 uses the air cooler 5 suitable for outdoor installment, this should not be construed in a limiting sense. The rotating electrical machine 1 may use an air cooler intended for indoor installment. FIG. 9 illustrates an exemplary modification. In this modification, the air cooler 5A includes none of the external fan 14 nor the cooling pipe 16 illustrated in FIG. 1. The air cooler 5A uses internal fans 15 mounted to the shaft 10 to draw external air into the main body frame 4. Then, the air cooler 5A uses the drawn external air as cooling air to cool the rotor 2 and the stator 3, and discharges used air from the main body frame 4 to the outside.

As illustrated in FIG. 9, air inlet windows 35a and 35b are disposed at the load side and the anti-load side of the outer circumference surface of the main body frame 4 accommodating the rotor 2 and the stator 3. An exhaust column 36 is disposed above the main body frame 4. In the rotating electrical machine 1 according to this modification, the internal fans 15 are respectively disposed at one side and the other side of the shaft 10 in the axial direction of the rotor 2, which is not illustrated in FIG. 9. The rotating electrical machine 1 is otherwise similar to the above-described embodiment.

In the main body frame 4, the internal fans 15 are respectively mounted at the load side and the anti-load side of the shaft 10. By the rotation of the internal fans 15, the air cooler 5A draws in external air through the air inlet windows 35a and 35b. In order to use the obtained air as cooling air, the air cooler 5A draws the obtained air in the axial direction into the air conduits 19. Then, the air cooler 5A sends the cooling air from the air conduits 19 to the ventilation ducts 18 by centrifugal force, and causes the cooling air to flow through the ventilation ducts 18 radially outward so as to cool the rotor 2 and the stator 3. Used air flows from the ventilation ducts 18 to the exhaust column 36, and is discharged from the exhaust column 36 to the outside. Thus, the air cooler 5A uses external air directly to cool the rotating electrical machine 1, and thus is suitable for indoor use.

Since the air cooler 5A according to this modification uses external air directly to cool the rotating electrical machine 1, there is no need for the cooler frame 17, the external fan 14, and the cooling pipe 16. This leads to a reduced size of the rotating electrical machine 1.

### (6) Shifted positions of ventilation ducts in stator and rotor

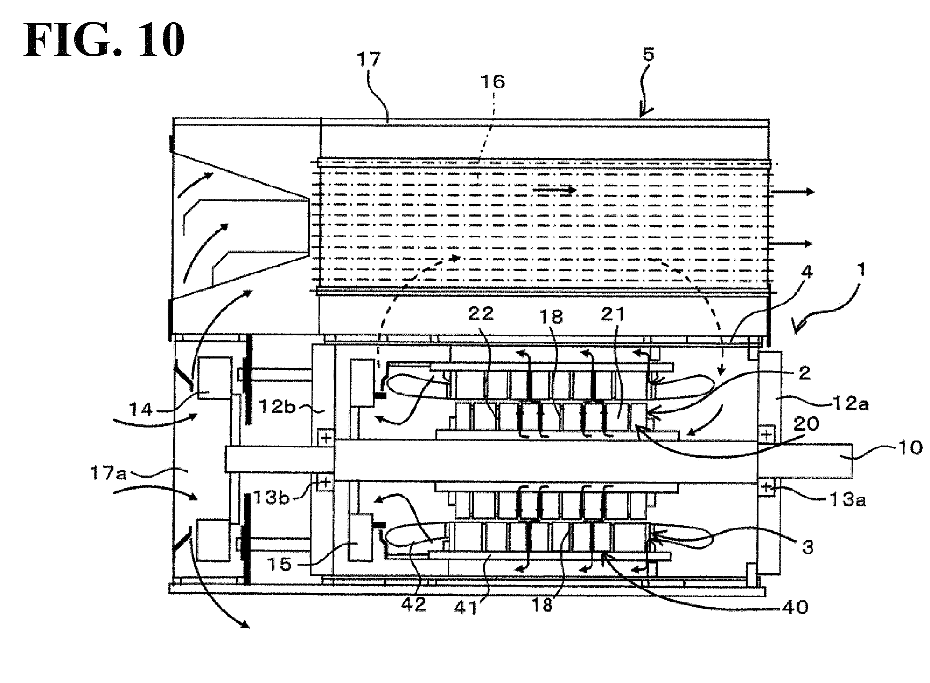

In the above-described embodiment, the positions of the ventilation ducts 18 in the stator 3 match the positions of the ventilation ducts 18 in the rotor 2 as illustrated in FIG. 1. This, however, should not be construed in a limiting sense; the positions may not match each other. For example, as illustrated in FIG. 10, the positions of the ventilation ducts 18 in the stator 3 may be shifted from the positions of the ventilation ducts 18 in the rotor 2.

### (7) Notch disposed on outer circumference of conductive bar member

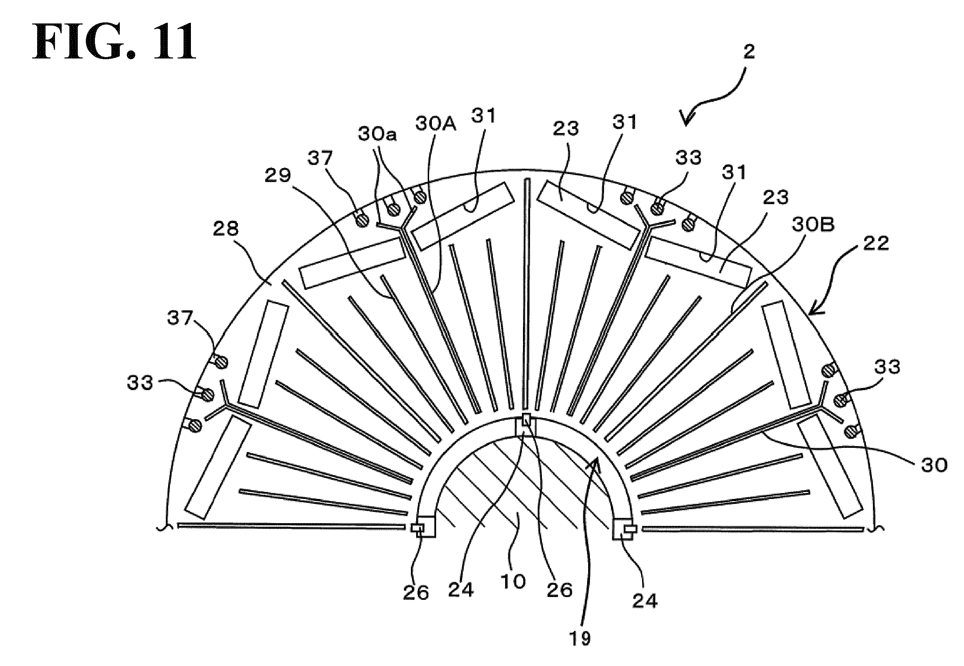

As illustrated in FIG. 11, a plurality of conductive bar members 33 are disposed in the outer circumference side area of each pair of permanent magnets 23 in the rotor iron core 20. Here, notches 37 may be respectively disposed on the bar members 33 at the outer circumference side. The insertion holes for the bar members 33 are formed by a punching operation through the rotor iron core 20. It is possible to use this opportunity of the punching operation to form the notches 37.

### (8) Other notes

In the above-described embodiment, the rotating electrical machine has been described as an electric generator. This, however, should not be construed in a limiting sense. In another possible embodiment, the rotating electrical machine may be a motor.

As used herein, the term "right angle" may not necessarily mean "right angle" in a strict sense. Specifically, there may be design-related and production-related tolerance and error, and the term "right angle" means "approximately right angle".

Otherwise, the above-described embodiments and modification embodiment may be combined in any manner deemed suitable.

Obviously, numerous modifications and variations of the present disclosure are possible in light of the above teachings. It is therefore to be understood that within the scope of the appended claims, the present disclosure may be practiced otherwise than as specifically described herein.
- 1: Rotating electrical machine
- 1A: Rotating electrical machine
- 2: Rotor
- 3: Stator
- 10: Shaft
- 18: Ventilation duct
- 20: Rotor iron core
- 21: Iron core block
- 22: Duct member
- 23: Permanent magnet
- 28: Duct plate
- 29: Second duct piece (duct piece)
- 30A: First duct piece (duct piece, bracing means)
- 30B: First duct piece (duct piece)
- 30a: Inclined portion
- 31: Through hole
- 33: Bar member (bracing means)

## Claims

1. A rotor (2) of a rotating electrical machine (1), **characterized by**:
a rotor iron core (20) comprising a plurality of iron core blocks (21);
a plurality of duct members (22) each disposed between two adjacent iron core blocks (21) among the plurality of iron core blocks (21) and each comprising a circular duct plate (28) comprising a plurality of radial duct pieces (29, 30A, 30B) disposed in the circular duct plate (28);
a plurality of permanent magnets (23) disposed in each of the plurality of iron core blocks (21); and
a plurality of through holes (31) in the duct plate (28) for the plurality of permanent magnets (23) to be disposed in the plurality of through holes (31).

2. The rotor (2) of the rotating electrical machine (1) according to claim 1, wherein the plurality of duct pieces (29, 30A, 30B) comprise
a first duct piece (30A, 30B) disposed between two adjacent through holes (31) among the plurality of through holes (31) in a circumferential direction, the first duct piece (30A, 30B) radially extending to a vicinity of an edge portion of the duct plate (28), and
a second duct piece (29) disposed in an area in the circumferential direction in which the two adjacent through holes (31) are disposed, the second duct piece (29) radially extending to an inner circumference side of one through hole (31) among the two adjacent through holes (31).

3. The rotor (2) of the rotating electrical machine (1) according to claim 2, wherein the first duct piece (30A, 30B) comprises an at least one inclined portion (30a) inclined relative to a radial direction in an area at an outer circumference side of at least one through hole (31) among the two adjacent through holes (31).

4. The rotor (2) of the rotating electrical machine (1) according to claim 3, wherein the at least one inclined portion (30a) comprises two inclined portions (30a) respectively inclined toward one side and another side of the circumferential direction relative to the radial direction.

5. The rotor (2) of the rotating electrical machine (1) according to any one of claims 1 to 4, further comprising a plurality of conductive bar members (33) the plurality of conductive bar members (33) penetrating through the plurality of iron core blocks (21) and the plurality of duct members (22) in an axial direction in areas at outer circumference sides of the plurality of permanent magnets (23) in the rotor iron core (20).

6. The rotor (2) of the rotating electrical machine (1) according to any one of claims 1 to 5, wherein the duct members (22) each comprise a non-magnetic material.

7. The rotor (2) of the rotating electrical machine (1) according to any one of claims 1 to 6, wherein the plurality of permanent magnets (23) comprise a plurality of pairs of the permanent magnets (23), each of the pairs of the permanent magnets (23) forming an approximately V shape in a view from an axial direction.

8. A rotating electrical machine (1), **characterized by**:
a stator (3);
the rotor (2) according to any one of claims 1 to 7; and
a shaft (10) to which the rotor (2) is secured.
